# EUROPEAN PATENT APPLICATION

(11) **EP 1 602 572 A1**
(43) Date of publication of application: **07.12.2005**
(21) Application number: 04425413.4
(22) Date of filing: 04.06.2004
(51) Int. Cl.: B62M 9/12

(54) **Chain guide for the front derailleur of a bicycle**

(71) Applicant: CAMPAGNOLO S.R.L., I-36100 Vicenza (IT)
(72) Inventor: Valle, Maurizio, 36100 Vicenza (IT); Pasqua, Paolo, 36100 Vicenza (IT)
(74) Representative: Castiglia, Paolo

(57) **Abstract**

A chain guide (3) for the front derailleur (1) of a bicycle, comprising a first plate (4) intended to shift a chain from a first toothed crown to a second toothed crown with a larger diameter, a second plate (5) facing said first plate (4) and intended to shift said chain from said second toothed crown to said first toothed crown and connecting means (7) between said first plate (4) and said second plate (5). The first plate (4) comprises a first thrusting portion (41) for shifting said chain from said first toothed crown to said second toothed crown. The first thrusting portion (41) is defined on a projection (46) in turn defined at a first plate portion (410) and having a lower profile (450) that projects with respect to the lower profile of the remaining plate portion (451,452). It is thus possible to minimize the size of the other portions of the first plate, thus achieving a weight reduction of the chain guide, without altering its performance or reducing its structural strength.

## Description

The present invention relates to a chain guide for the front derailleur of a bicycle, i.e. a device capable of determining and guiding during travel the shifting of the chain from one toothed crown of a group of toothed crowns of a bottom bracket of a bicycle to another toothed crown having a different diameter, thus carrying out the gearshifting.

The invention also refers to a front derailleur comprising such a chain guide and to a plate for such a chain guide.

As known, a front derailleur of a bicycle comprises a chain guide (or cage) and a positioning mechanism of the chain guide above the chain. Typically, the positioning mechanism of the chain guide is an articulated parallelogram mechanism, which is fixed to the frame of the bicycle at the seat tube. The chain guide can be associated with the positioning mechanism or can constitute an integral part thereof. The movement of the positioning mechanism is usually determined through mechanical or electromechanical actuators that respond to the cyclist's command. Such a movement causes the displacement of the chain guide with respect to the toothed crowns of the crankset connected to the bottom bracket of the bicycle and, consequently, the gearshifting.

With reference to the operating configuration when mounted on a bicycle, the chain guide essentially comprises a first plate or inner plate, which, with respect to the chain, lies on the side of the bicycle frame, a second plate or outer plate, which, with respect to the chain, lies on the opposite side to the first plate and connecting means between said inner and outer plates. The inner and outer plates face each other and are substantially parallel.

The inner plate acts by thrusting the chain to shift it from a crown with a smaller diameter to one with a larger diameter (upward gearshifting) and the outer plate acts thrusting upon the chain to shift it from a crown with a larger diameter to one with a smaller diameter (downward gearshifting). In particular, the inner plate guides the shifting of the chain from the crown with a smaller diameter to the one with a larger diameter ensuring a continuous thrusting action on the chain against the front surface of the crown with a larger diameter; the inner plate thus typically has a surface extension larger than that of the outer plate, which, on the other hand, simply thrusts the chain away from the crown with a larger diameter to let it fall upon the crown with a smaller diameter.

A known derailleur is described in US 4,586,913. Such a derailleur essentially comprises a positioning mechanism of the chain guide consisting of an articulated quadrilateral comprising a fixed member integral with the frame of the bicycle and two connecting members between fixed member and chain guide which are articulated with respect to each other through pins. With reference to its mounted position on the bicycle, the chain guide comprises an inner plate and an outer plate joined at the top by a connecting plate and, at respective end portions, by a fastening screw. The inner plate extends downwards more than the outer plate. The lower profiles of the outer plate and of the inner plate both have a progression which is substantially circular and coaxial with respect to the centre of rotation of the toothed crowns.

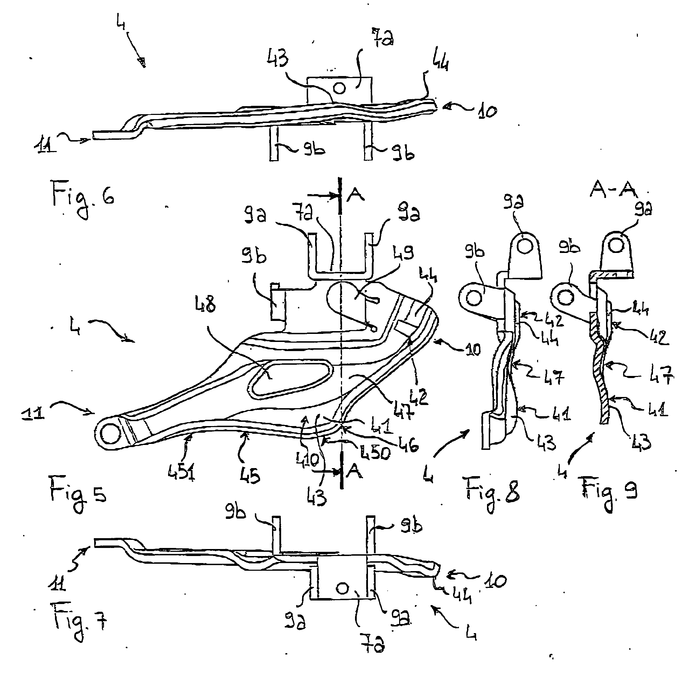

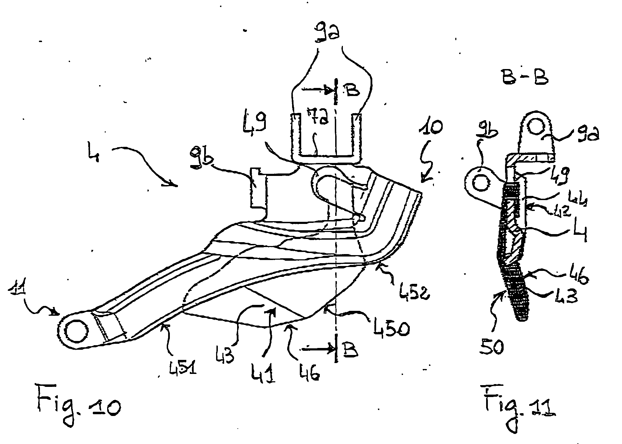

Another known derailleur is described in US 5,171,187 and also comprises a quadrilateral positioning mechanism associated with a chain guide comprising an inner plate and an outer plate. Also in this case the inner plate extends downwards more than the outer plate and the lower profiles of the plates both have a progression which is substantially circular and coaxial with respect to the centre of rotation of the toothed crowns. On the inner plate a first thrusting portion, defined on a lower plate portion and active for shifting the chain from a first toothed crown to a second toothed crown with a larger diameter, and a second thrusting portion, defined on an upper plate portion and active for shifting the chain from the second toothed crown to a third toothed crown with an even larger diameter, are defined. In a different embodiment illustrated in figures 9 and 10, the chain guide also comprises a chain contact portion , realised at a free end of the inner plate, which helps to prevent the falling of the chain over the first crown when the chain is shifted from the third crown to the second crown. Such a contact portion extends downwards, i.e. towards the rotation axis of the crowns, beyond the circumference defined by the ideal extension of the lower thrusting portion.

Yet another known derailleur is described in US 4,551,121. This patent discloses, in particular, a chain guide having an inner plate in which parts swollen towards the outer plate alternate with not-swollen parts. Also in this case, the inner plate extends downwards more than the outer plate.

In known chain guides, the need to provide an inner plate with greater extension with respect to that of the outer plate inevitably contributes to increase the overall weight of the chain guide.

A constant demand of manufacturers of bicycles and/or bicycle components, especially of racing bicycles, is that of reducing as much as possible the overall weight of the bicycle and, therefore, of the various components of the bicycle. In accordance with such a demand, the Applicant has designed and manufactured a chain guide for the front derailleur of a bicycle having a reduced weight with respect to chain guides of the prior art, whilst still retaining the same functional characteristics.

According to a first aspect thereof, the present invention therefore relates to a chain guide for the front derailleur of a bicycle, comprising:
- a first plate intended to shift a chain from a first toothed crown to a second toothed crown with a larger diameter;
- a second plate facing said first plate and intended to shift said chain from said second toothed crown to said first toothed crown; and
- connecting means between said first plate and said second plate;
characterised in that said first plate comprises a first thrusting portion for shifting said chain from said first toothed crown to said second toothed crown, wherein said first thrusting portion is defined on a projection in turn defined at a first plate portion and having a lower profile that projects with respect to the lower profile of the remaining plate portion.

Throughout the present description and the subsequent claims, the terms "lower" or "upper" should be interpreted with reference to the operating configuration of the chain guide mounted on the bicycle. The first plate shall hereafter also be interchangeably indicated with the term: inner plate, since, in the operating configuration of the chain guide mounted on the bicycle, it lies in an inner position with respect to the chain (from the side of the bicycle frame); in the same way, the second plate shall also be interchangeably indicated with the term: outer plate, since, in the operating configuration of the chain guide mounted on the bicycle, it lies in an outer position with respect to the chain (from the side of the toothed crown with a larger diameter).

Advantageously, the substantial localisation of the first thrusting portion on a projection defined at a first plate portion and projecting at the bottom with respect to the other plate portions allows the size of the other portions of said first plate to be minimized, thus achieving the desired reduction in weight of such a plate and, consequently, of the chain guide as a whole, without altering its performance or reducing its structural resistance.

Preferably, the projection is defined at an intermediate zone of said first plate. Even more preferably, the projection is defined at a zone substantially equidistant from opposite first and second free end portions of said first plate.

In this way, in the operating configuration of the chain guide when mounted on the bicycle, the first thrusting portion is advantageously in an optimal position for carrying out its thrusting action on the chain during upward gearshifting and for guiding the chain over the teeth of the crown with a smaller diameter during downward gearshifting.

Preferably, the projection extends, in the longitudinal direction of the first plate, over a portion not larger than one third of the longitudinal size of said first plate.

Preferably, the projection comprises a first swelling towards said second plate. Advantageously, such a swelling allows the first thrusting portion to come into contact with the chain in the first phases of upward gearshifting to thrust it against the front surface of the toothed crown with a larger diameter, without the chain coming into contact with the other portions of the first plate, an event that could make the action of the chain guide less efficient and cause disturbing noises during gearshifting.

In a preferred embodiment of the present invention, the projection is integrally formed with the first plate and can therefore advantageously be manufactured together with it in a single manufacturing process, e.g. by moulding, plastic deformation from a sheet, casting or die casting.

In an alternative embodiment, the projection is defined on an element removably associated with the first plate. This solution allows an inner plate of a standard chain guide (for example a chain guide used for double cranksets with two toothed crowns) to be adapted to different operating demands that require first thrusting portions of different shape and/or size and more or less projecting.

Preferably, said first plate comprises a second thrusting portion for shifting said chain from said at least one first toothed crown to said at least one second toothed crown, wherein said second thrusting portion is defined at a second plate portion arranged above said first plate portion. More preferably, said second thrusting portion is defined at a free end portion of said first plate. Even more preferably, said second thrusting portion comprises a second swelling towards said second plate.

Advantageously, the second swelling allows the second thrusting portion to come into contact with the chain in the last phases of upward gearshifting to position it on the toothed crown with a larger diameter, without the chain coming into contact with other portions of the first plate, an event that could make the action of the chain guide less effective and cause disturbing noises during gearshifting.

In a preferred embodiment of the invention, said second thrusting portion is integrally formed with said first plate.

In an alternative embodiment, said second thrusting portion is defined on an element removably associated with said first plate. In such a case, preferably, said first and second thrusting portions are defined on a single element removably associated with said first plate. However, an embodiment can be foreseen in which said first and second thrusting portions are defined on respective and distinct elements removably associated with said first plate.

Preferably, said first plate comprises a depressed plate portion between said first swelling and said second swelling. In the first plate a S-shaped profile is thus defined both in the vertical direction and in the longitudinal direction. During its displacement in upward gearshifting, the chain passes from the first swelling to the second swelling through the depressed plate portion.

Preferably, the first plate comprises at least one lightening hole, which further contributes to the reduction in weight of the plate and therefore of the chain guide overall.

In a preferred embodiment, the first plate is made from a metal material, in order to ensure that it has sufficient structural strength and durability. Preferably, such a metal material comprises light metal alloys, such as aluminium alloys.

In an alternative embodiment, the first plate can be made from a composite material, like for example structural fibres incorporated in a matrix of polymeric material. The structural fibres can be selected from the group of carbon fibres, glass fibres, aramidic fibres, boron fibres and combinations thereof.

The second plate, being less stressed with respect to the first plate, is preferably made from a composite material, with advantages as to the overall weight of the chain guide. Preferably, the composite material comprises structural fibres such as glass fibres, carbon fibres, kevlar fibres and combinations thereof.

In an alternative embodiment, the second plate can also be made from a metal material. In such a case, the second plate is preferably integrally formed with the first plate, for example through successive steps of plastic deformation of a sheet.

According to a second aspect thereof, the invention refers to a front derailleur of a bicycle comprising a chain guide having the above outlined characteristics. Such a derailleur possesses all of the advantageous characteristics discussed above with reference to the chain guide of the invention.

According to a third aspect thereof, the present invention refers to a plate for the chain guide of a front derailleur of a bicycle comprising a first thrusting portion of a bicycle chain for shifting said chain from a first toothed crown to a second toothed crown with a larger diameter,
characterised in that said first thrusting portion is defined on a projection defined at a first plate portion and having a lower profile that projects with respect to the lower profile of the remaining plate portion. Such a plate is intended to be used in the chain guide of the present invention and allows therefore all of the advantageous characteristics discussed above with reference to the chain guide of the invention to be achieved.

Further characteristics and advantages of the present invention shall become clearer from the following description of some preferred embodiments thereof, made hereafter, for indicating and not limiting purposes, with reference to the attached drawings. In such drawings:
- figure 1 is a schematic front view of a chain guide for a front derailleur of a bicycle and of the corresponding derailleur according to a first preferred embodiment of the invention, in the operating configuration mounted on a bicycle;
- figure 2 is a front view of the chain guide of figure 1;
- figure 3 is a top view of the chain guide of figure 1;
- figure 4 is a side view of the chain guide of figure 1;
- figure 5 is a front view of a plate of the chain guide of figure 1;
- figure 6 is a bottom view of the plate of figure 5;
- figure 7 is a top view of the plate of figure 5;
- figure 8 is a side view of the plate of figure 5;
- figure 9 is a section view along the line A-A of figure 5;
- figure 10 is a front view of a plate of the chain guide of figure 1 according to a second preferred embodiment of the invention;
- figure 11 is a section view along the line B-B of figure 10.

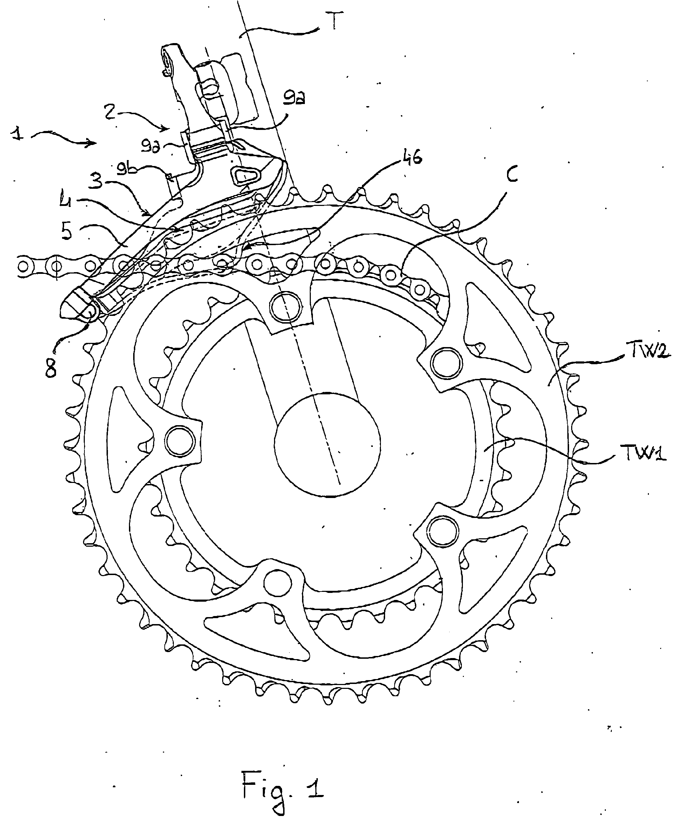

In such figures, a front derailleur of a bicycle (not shown in the figures) comprising a chain guide 3 according to the present invention is globally indicated with reference numeral 1. The front derailleur 1 essentially comprises an articulated quadrilateral positioning mechanism 2, of which the chain guide 3 constitutes one side. As shown in figure 1, the front derailleur 1 is fixed in a conventional way to a frame portion of the bicycle, usually a seat tube T (only partially visible in figure 1), in such a way that the chain guide 3 in its operating configuration lies above and close to a bottom bracket comprising a pack of toothed crowns (for example a pair of crowns TW1, TW2) and can act upon a chain C wound on one of such crowns.

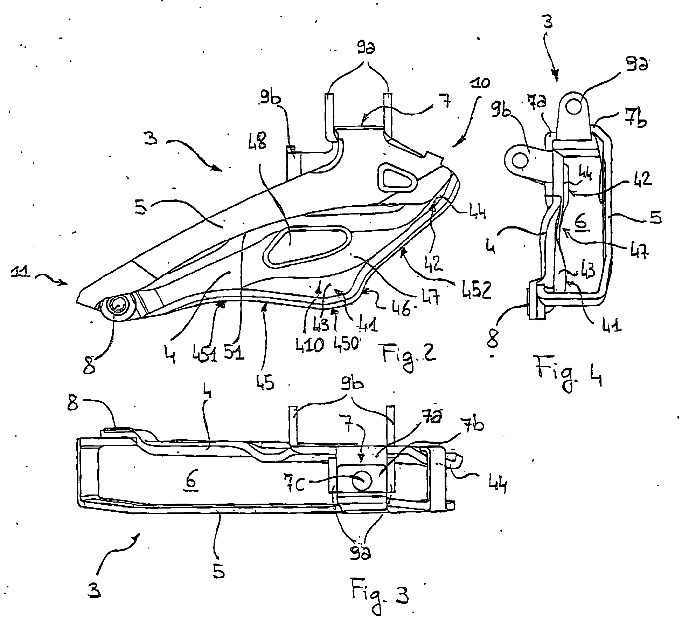

The chain guide 3 (see figures 2-4) comprises a first plate 4, or inner plate, and a second plate 5, or outer plate, facing each other and substantially parallel, between which a space 6 is defined for the passage of the chain C.

The chain guide 3 further comprises, near to a first longitudinal end thereof 10, an upper connecting plate 7, preferably defined by two projections 7a, 7b integrally formed respectively with the inner plate 4 and the outer plate 5, at least partially overlapping and firmly connected together in a conventional way (for example through a pin 7c). At an opposite longitudinal end 11 further connecting means 8 of the two plates 4 and 5, for example screws, and in any case of the conventional type, are provided. The chain guide 3 is also provided with two pairs of projecting eyelets 9a, 9b, preferably formed integrally with the inner plate 4, which allow the chain guide 3 to be connected by a pin to the other elements of the positioning mechanism 2.

As can be seen in figures 2-4 and in greater detail in figures 5-9, the inner plate 4 comprises a first thrusting portion 41 and, in an upper position with respect to it and close to the longitudinal end 10, a second thrusting portion 42, at which the chain guide 3 thrusts the chain C during upward gearshifting, as better described hereafter.

The inner plate 4 has a lower profile 45. According to the invention, the thrusting portion 41 is defined on a projection 46 defined at a first plate portion 410 and having a lower profile 450 projecting downwards with respect to the lower profile 451, 452 of the remaining plate portion (again with reference to the operating configuration shown in figure 1).

The projection 46 on which the thrusting portion 41 is defined is located in an intermediate position of the lower profile 45, preferably substantially equidistant from the longitudinal ends 10, 11 of the inner plate 4. In particular, the projection 46 extends longitudinally over a portion not larger than one third of the longitudinal size of the inner plate 4.

In a preferred embodiment of the invention, the projection 46 is integrally formed with the inner plate 4 on the plate portion 410 (figures 2-9). In an alternative embodiment, shown in figures 10 and 11, the projection 46 may constitute a portion of an element 50 distinct from the inner plate 4 and removably associated therewith in a conventional way, for example through coupling at a hole 49 formed on the inner plate 4 and at the lower profile thereof. The hole 49 is formed as a consequence of the realisation of the projecting eyelet 9b, which is obtained by bending the edge of metal material which results from shearing the inner plate 4 with the desired eyelet shape.

The inner plate 4 further comprises a first swelling 43 and a second swelling 44 projecting towards the inside of the chain guide 3 and respectively defined at the first thrusting portion 41 and at the second thrusting portion 42. Between the swellings 43, 44 a depressed plate portion 47 is defined. In the preferred embodiment illustrated in the figures, the swellings 43, 44 are integrally formed with the inner plate 4; in alternative embodiments (not shown) one or both of them can be defined through additional plate-shaped elements removably associated with the inner plate 4.

The swellings 43, 44 and the depression 47 globally give the inner plate 4 a substantially S-shaped progression both in the vertical direction, as can be seen in figures 8 and 9, and in the longitudinal direction, as can be seen in figures 6 and 7.

The inner plate 4 also comprises a lightening hole 48, preferably in a substantially central position.

The inner plate 4 is made from a light metal alloy, such as aluminium alloy, or alternatively from composite material, like for example from structural fibres incorporated in a matrix of polymeric material. The structural fibres can be selected from the group of carbon fibres, glass fibres, aramidic fibres, boron fibres and combinations thereof.

In the embodiments in which the projection 46 and/or the swellings 43, 44 consists of elements associated with the inner plate 4, but distinct from it, such elements can be made from a material different to that of the plate 4, for example resins or resins loaded with structural fibres.

The outer plate 5, active in downward gearshifting as better described hereafter and substantially of the known type, has a lower profile 51 that is substantially semicircular and coaxial with respect to the toothed crowns TW1, TW2, and is made from a composite material comprising high-strength structural fibres, such as glass fibres, carbon fibres, kevlar fibres or combinations thereof. The second plate can, however, be made from a metal material and preferably integrally with the first plate, for example through successive steps of plastic deformation of a sheet.

During operation, the displacement of the chain guide 3 to carry out gearshifting is determined by a command given by the cyclist and transmitted to the positioning mechanism 2 of the derailleur 1 through a suitable actuator (not shown).

In the case of upward gearshifting, the chain guide 3 is displaced outwards and the inner plate 4 acts thrusting upon the chain C to shift it from the crown with a small diameter TW1 to the crown with a greater diameter TW2. More specifically, in a first step the first thrusting portion 41 with the first swelling 43 comes into contact with the chain C to thrust it against the front surface of the crown C with a larger diameter TW2 and to start the displacement thereof upwards (such a situation corresponds to that which is represented in fig. 1). In a subsequent step the chain C rises towards the toothed crown with a larger diameter TW2 following the substantially S-shaped profile of the inner plate 4, passing through the depression 47. In the final step of upward gearshifting, the chain C is thrust over the teeth of the crown with a larger diameter TW2 by the second thrusting portion 42 with the second swelling 44.

In the case of downward gearshifting the chain guide 3 is displaced inwards and the outer plate 5 acts thrusting upon the chain C to shift it from the crown with a larger diameter TW2 to the crown with a smaller diameter TW1. More specifically, the outer plate 5 comes into contact with the chain C and thrusts it towards the crown with a smaller diameter TW1. In the final step of downward gearshifting the chain C is guided over the teeth of the crown with a smaller diameter TW1 by the first swelling 43 at the first thrusting portion 41 of the inner plate 4; in this step such a first swelling 43 also allows the falling of the chain over the crown with a smaller diameter TW2 to be avoided.

A man skilled in the art may of course introduce modifications and variants to the preferred embodiments of the invention described above in order to satisfy specific and contingent operational requirements, such modifications and variants in any case falling within the scope of protection as defined by the subsequent claims.

## Claims

1. Chain guide (3) for a front derailleur (1) of a bicycle, comprising:
- a first plate (4) intended to shift a chain (C) from a first toothed crown (TW1) to a second toothed crown (TW2) with a larger diameter;
- a second plate (5) facing said first plate (4) and intended to shift said chain (C) from said second toothed crown (TW2) to said first toothed crown (TW1); and
- connecting means (7,7a,7b,7c) between said first plate (4) and said second plate (5);
**characterised in that** said first plate (4) comprises a first thrusting portion (41) for shifting said chain (C) from said first toothed crown (TW1) to said second toothed crown (TW2), wherein said first thrusting portion (41) is defined on a projection (46) in turn defined at a first plate portion (410) and having a lower profile (450) that projects with respect to the lower profile of the remaining plate portion (451,452).

2. Chain guide (3) according to claim 1, wherein said projection (46) is defined at an intermediate zone (410) of said first plate (4).

3. Chain guide (3) according to claim 2, wherein said projection (46) is defined at a zone substantially equidistant (410) from opposite first and second free end portions (10,11) of said first plate (4).

4. Chain guide (3) according to any one of the previous claims, wherein said projection (46) extends in the longitudinal direction over a portion not larger than one third of the longitudinal size of said first plate (4).

5. Chain guide (3) according to any one of the previous claims, wherein said projection (46) comprises a first swelling (43) towards said second plate (5).

6. Chain guide (3) according to any one of the previous claims, wherein said projection (46) is integrally formed with said first plate (4).

7. Chain guide (3) according to any one of claims 1 to 5, wherein said projection (46) is defined on an element (50) removably associated with said first plate (4).

8. Chain guide (3) according to any one of the previous claims, wherein said first plate (4) comprises a second thrusting portion (42) for shifting said chain (C) from said at least one first toothed crown (TW1) to said at least one second toothed crown (TW2), wherein said second thrusting portion (42) is defined at a second plate portion arranged above said first plate portion (410).

9. Chain guide (3) according to claim 8, wherein said second thrusting portion (42) is defined at a free end portion (10) of said first plate (4).

10. Chain guide (3) according to claim 8 or 9, wherein said second thrusting portion (42) comprises a second swelling (44) towards said second plate (5).

11. Chain guide (3) according to any one of claims 8 to 10, wherein said second thrusting portion (42) is integrally formed with said first plate (4).

12. Chain guide (3) according to any one of claims 8 to 10, wherein said second thrusting portion (42) is defined on an element removably associated with said first plate (4).

13. Chain guide (3) according to claim 7 and 12, wherein said first and second thrusting portions (41,42) are defined on a single element removably associated with said first plate (4).

14. Chain guide (3) according to claim 7 and 12, wherein said first and second thrusting portions (41,42) are defined on respective and different elements removably associated with said first plate (4).

15. Chain guide (3) according to any one of claims 10 to 14, wherein said first plate (4) comprises a depressed plate portion (47) between said first swelling (43) and said second swelling (44).

16. Chain guide (3) according to any one of the previous claims, wherein said first plate (4) comprises at least one lightening hole (48).

17. Chain guide (3) according to any one of the previous claims, wherein said first plate (4) is made from a metal material.

18. Chain guide (4) according to claim 17, wherein said first plate (4) is made from aluminium alloy.

19. Front derailleur (1) of a bicycle, comprising a chain guide (3) and an articulated quadrilateral mechanism (2) adapted to drive the displacement of said chain guide (3),
**characterised in that** said chain guide (3) is a chain guide according to any one of the previous claims.

20. Plate (4) for a chain guide (3) of a front derailleur (1) of a bicycle, **characterised in that** it comprises a first thrusting portion (41) for thrusting a bicycle chain (C) for shifting said chain (C) from a first toothed crown (TW1) to a second toothed crown (TW2) with a larger diameter, wherein said first thrusting portion (41) is defined on a projection (46) in turn defined at a first plate portion (410) and having a lower profile (450) that projects with respect to the lower profile (45) of the remaining plate portion (451,452).
